# EUROPÄISCHE PATENTSCHRIFT

(11) **EP 3 976 842 B1**
(45) Veröffentlichungstag und Bekanntmachung des Hinweises auf die Patenterteilung: **22.10.2025**
(21) Anmeldenummer: 20728468.8
(22) Anmeldetag: 25.05.2020
(51) Int. Cl.: C21D 8/04, C22C 38/54, C22C 38/50, C22C 38/46, C22C 38/44, C22C 38/38, C22C 38/32, C22C 38/28, C22C 38/26, C22C 38/24, C22C 38/22, C22C 38/06, C22C 38/02, C22C 38/00, B23K 9/23, B23K 9/025, B23K 9/16, B23K 26/242, B23K 26/244, B23K 26/32

(54) **VERFAHREN ZUR HERSTELLUNG EINES GESCHWEISSTEN BAUTEILS AUS EINEM UMGEFORMTEN HOCHFESTEN STAHL**
METHOD FOR PRODUCING A WELDED COMPONENT MADE OF A DEFORMED HIGH-STRENGTH STEEL
PROCÉDÉ DE FABRICATION D'UN COMPOSANT SOUDÉ À PARTIR D'UN ACIER HAUTE RÉSISTANCE NON MIS EN FORME

(30) Priorität: 27.05.2019 DE 102019114090
(43) Veröffentlichungstag der Anmeldung: 06.04.2022
(73) Patentinhaber: Salzgitter Flachstahl GmbH, 38239 Salzgitter (DE)
(72) Erfinder: OTTO, Manuel, 47259 Duisburg (DE)
(74) Vertreter: Moser Götze & Partner Patentanwälte mbB
(86) Internationale Anmeldenummer: PCT/EP2020/064399
(87) Internationale Veröffentlichungsnummer: WO 2020/239671

(56) Entgegenhaltungen:
- EP-B1- 3 276 033
- WO-A1-99/05336
- WO-A1-99/28518
- CN-A- 107 974 621
- CN-A- 109 136 762
- CN-A- 109 402 499
- DE-A1- 102007 058 222
- DE-A1- 102016 104 295
- DE-T2- 69 821 954
- KR-A- 20090 103 779
- US-A1- 2007 267 110
- US-A1- 2013 206 286
- US-B2- 8 715 430

## Beschreibung

Die Erfindung betrifft ein Verfahren zur Herstellung eines geschweißten Bauteils, bei dem ein warmgewalztes Stahlprodukt aus hochfestem Stahl mit einer Materialdicke von mindestens 1,5 mm zu einem Bauteil umgeformt und anschließend Schweißverbindungen mittels Schmelzschweißen an dem Bauteil erzeugt werden.

Der heiß umkämpfte Automobilmarkt zwingt die Hersteller unter anderem ständig nach Lösungen zur Senkung des Kraftstoffverbrauches eines Fahrzeugs unter Beibehaltung eines höchstmöglichen Komforts und größtmöglichen Insassenschutzes zu suchen. Dabei spielt einerseits die Gewichtsersparnis aller Fahrzeugkomponenten eine entscheidende Rolle, andererseits aber auch ein möglichst günstiges Verhalten der einzelnen Karosserie- und Fahrwerksbauteile bei hoher statischer und dynamischer Beanspruchung im Betrieb, wie auch im Crashfall. Dieser Notwendigkeit versuchen die Lieferanten dadurch Rechnung zu tragen, dass durch die Bereitstellung hochfester und höchstfester Stähle, die Wanddicken reduziert werden können, bei gleichzeitig verbessertem Bauteilverhalten bei dessen Fertigung und im Betrieb. Derartige Stähle müssen daher vergleichsweise hohen Anforderungen hinsichtlich Festigkeit, Dehnfähigkeit, Zähigkeit, Energieaufnahme, Dauerschwingfestigkeit sowie Betriebsfestigkeit und Verarbeitbarkeit, beispielsweise durch Kaltumformen, Schweißen und/oder Oberflächenbehandeln genügen.

Aufgrund der hohen Korrosionsanforderungen müssen die Oberflächen dieser Stähle oftmals mit entsprechenden Korrosionsschutzschichten, wie beispielsweise aus Zink, ausführbar sein, wobei sowohl die konventionelle Schmelztauchverzinkung als auch die Hochtemperaturverzinkung zur Anwendung kommt.

In der Vergangenheit sind für diesen Anwendungsbereich meist konventionelle Stähle mit relativ großer Blechdicke, wasservergütete hochfeste Feinkornstähle oder Mehrphasenstähle eingesetzt worden.

Der Einsatz konventioneller Stähle ist hierbei mit dem Nachteil des großen Bauteilgewichts behaftet. Alternative höchstfeste Mehrphasenstähle weisen Nachteile auf, wie schlechtere Schweißeignung und schlechtere Umformbarkeit infolge der hohen Grundhärte. Wasservergütete Stähle sind in der Herstellung teuer und damit oftmals unwirtschaftlich.

Werden diese Stähle einer nachträglichen thermischen Behandlung, zum Beispiel durch Schweißen, ausgesetzt, in deren Folge Temperaturen im Schweißnahtbereich von über Ac3 (ca. 900 °C) entstehen, verlieren diese Stähle ihre ursprüngliche Festigkeit. Bei mehrfachen Wärmebehandlungen, wie zum Beispiel bei sich kreuzenden Schweißnähten im entsprechend wärmebehandelten Bereich, wiederholt sich dieses Phänomen, so dass der Stahl stetig an Festigkeit verliert.

Bei hochfesten Mehrphasenstählen ist dieser Festigkeitsverlust nach entsprechender Wärmebehandlung noch ausgeprägter, weil der ursprüngliche martensitische Phasenanteil bei der Erwärmung oberhalb der Umwandlungstemperatur Ac3 dann verloren geht, wenn die Abkühlung nicht gesteuert und intensiviert abläuft.

Dies ist insbesondere bei dynamisch beanspruchten, geschweißten Fahrwerksbauteilen oder Fahrwerkskomponenten nachteilig, da hierdurch die geforderten Dauer- sowie Betriebsfestigkeiten gemäß Lastenheft nicht mehr erreicht werden. Diese Bauteile können dabei aus Stahlbändern oder Stahlblechen oder aber aus geschweißten, zum Beispiel Hochfrequenz-Induktions (HFI)-geschweißten Rohren oder auch nahtlosen Rohren hergestellt sein.

Im Folgenden werden daher im Sinne der Erfindung Stahlbänder, Stahlbleche, geschweißte oder nahtlose Rohre als Stahlprodukte zusammengefasst.

Aus diesen Gründen wurden als Alternative zu den bekannten Stählen lufthärtende Stahlwerkstoffe entwickelt, die die Nachteile der bekannten Stähle dadurch überwinden, dass nunmehr allein durch die Abkühlung des Stahls an Luft, beispielsweise nach einer Wärmebehandlung des Bauteils, die geforderten Werkstoffeigenschaften realisiert werden. Bei diesen Stählen wird eine gute Kaltumformbarkeit (zum Beispiel Rp0.2: < 420 MPa bei A80: >= 25 %) im weichgeglühten Zustand kombiniert mit einer hohen Festigkeit und Härte des umgeformten Bauteils im luftgehärteten Zustand (zum Beispiel Rm: > 800 MPa) erreicht. Die Wärmebehandlung kann zum Beispiel eine Ofenerwärmung oder Hochtemperaturverzinkung sein.

Bei einem Stahlband aus lufthärtendem Stahl kühlt der Stahl nach dem Warmwalzen zumindest abschnittsweise an Luft, insbesondere an ruhender Luft, so schnell ab, dass der Lufthärtungseffekt einsetzt. Im Stand der Technik ist es bislang nötig, die Kaltumformbarkeit zur Herstellung umgeformter Bauteile durch einen nachgeschalteten Weichglühvorgang, beispielsweise in einer Haubenglühe beziehungsweise durch ein Homogenisierungsglühen, zu erreichen. Die Kaltumformbarkeit kann alternativ nach dem Warmwalzen auch erhalten bleiben, wenn ein entsprechend eng gewickeltes Coil langsam, unter Umständen in einer speziellen wärmegedämmten Haube, abkühlt.

Entsprechendes gilt für nahtlos hergestellte warmgewalzte Rohre im Stand der Technik, die nach der Luftabkühlung und Härtung einem Weichglühprozess unterzogen werden, um die Kaltumformbarkeit wiederherzustellen.

In der Offenlegungsschrift DE 102 21 487 A1 wird die Verwendung eines lufthärtenden Stahlwerkstoffes für Formbauteile im Fahrzeugleichtbau offenbart, mit den Hauptelementen C (0,09 - 0,13 Gewichts-%), Si (0,15 - 0,30 Gewichts-%), Mn (1,10 - 1,60 Gewichts-%), Cr (1,0 - 1,6 Gewichts-%), Mo (0,30 - 0,60 Gewichts-%) und V (0,12 - 0,25 Gewichts-%), Rest Eisen einschließlich üblicher Begleitelemente.

Mit diesem Legierungskonzept auf Cr-Mo-V-Basis werden zwar die für den genannten Einsatzbereich geforderten mechanischen Werkstoffeigenschaften im luftgehärteten Zustand sowie eine gute Anlassbeständigkeit und Verzinkbarkeit erreicht, nachteilig hierbei ist jedoch der relativ hohe Cr-Gehalt von 1,0 - 1,6 Gewichts-%, der insbesondere bei dem für die Rohrherstellung häufig angewandten HFI-Schweißen, unerwünschte Chrom-Carbid Ausscheidungen in der Schweißnaht bewirken kann. Diese Ausscheidungen können bei der Weiterverarbeitung des geschweißten Rohres durch Umformen oder starker mechanischer Belastung des geschweißten Bauteils im Betrieb zur Rissbildung in der Schweißnaht und damit zum vorzeitigen Versagen des Bauteils führen. Der relativ hohe Chromgehalt wirkt weiterhin kostentreibend.

**Die Patentschrift** EP 0 576 107 B1 offenbart einen lufthärtenden Stahl mit einem abgesenktem Cr-Gehalt, der zur Herstellung von nahtlos hergestellten, unverzinkten Konstruktionsrohren, beispielsweise als Türverstärkerrohre im Automobilbau, Verwendung findet. Das Legierungskonzept auf Mn-Si-Ti-B-Basis weist als Hauptelemente C (0,15 - 0,30 Gewichts-%), Mn (2,05 - 3,35 Gewichts-%), Si (0,50 - 0,80 Gewichts-%), Cr (0,5 - 1,0 Gewichts-%), Mo (max. 0,6 Gewichts-%), Ti (0,01 - 0,05 Gewichts-%), B (0,0015 - 0,0035 Gewichts-%) und N (0,002 - 0,015 Gewichts-%), Rest Eisen und übliche Begleitelemente auf.

Nachteilig bei diesem für die nahtlose Rohrherstellung bekannten Stahl ist, dass bei diesem Legierungskonzept durch die relativ hohen C- und Mn-Gehalte die allgemeine Schweißbarkeit des Stahls eingeschränkt und durch den ebenfalls relativ hohen Si-Gehalt von bis zu 0,8 Gewichts-% die Verzinkbarkeit durch Schmelztauchen oder Hochtemperaturverzinken sehr stark eingeschränkt ist.

Untersuchungen haben darüber hinaus gezeigt, dass insbesondere durch das Fehlen von Vanadin zudem die weitgehende Anlassbeständigkeit dieses bekannten Stahls nicht gewährleistet ist, so dass bei höheren Temperaturen, beispielsweise ≥ 550 °C, wie sie zumBeispiel beim Hochtemperaturverzinken auftreten, die Festigkeit deutlich unter die geforderten Werte für einen luftgehärteten Stahl sinkt.

Notwendig für eine ausreichende Anlassbeständigkeit ist bekanntermaßen insbesondere die Bildung einer ausreichenden Menge an Cr-, Mo- und/oder V-Carbiden oder Carbonitriden, welche durch Ausscheidung auf den Korngrenzen die Gleitversetzungen bei erhöhten Temperaturen verhindern. Diesen Vorgang nennt man auch sekundäre Härtung.

Aus der Offenlegungsschrift DE 44 46 709 A1 ist die Verwendung eines lufthärtenden Stahls für Konstruktions-Hohlprofile aus nahtlos warmgefertigten Rohren, beispielsweise für Türverstärkerelemente, bekannt. Verwendet wird hierfür eine Stahllegierung mit den Hauptelementen: C (0,17 - 0,28 Gewichts-%), Mn (1,30 - 2,50 Gewichts-%), Si (0,30 - 0,49 Gewichts-%), Cr (≤ 0,49 Gewichts-%), Mo (0,20 - 0,40 Gewichts-%), Ni (0,05 - 0,19 Gewichts-%), Ti (0,02 - 0,07 Gewichts-%), B (0,0015 - 0,0050 Gewichts-%), Nb (0,01 - 0,10 Gewichts-%), V (0,01 - 0,10 Gewichts-%) und N (≤ 0,015 Gewichts-%), Rest Eisen und übliche Begleitelemente auf. Zusätzlich darf der Gesamtgehalt von V+Nb+Ti einen Wert von 0,15 Gewichts-% nicht überschreiten.

Dieses Legierungskonzept mit Zusätzen von Nb und Ni ist für die gestellten Anforderungen an einen lufthärtenden Stahl teuer und aufgrund des relativ hohen C-Gehaltes schweißtechnisch problematisch. Außerdem weist dieser Stahl mit 0,30 bis 0,49 Gewichts-% einen für die Verzinkbarkeit kritischen Gehalt an Silizium auf.

Die Offenlegungsschrift WO 99/05336 A1 offenbart ein Verfahren zur Herstellung eines ultrahochfesten, Bor enthaltenden Stahlflachproduktes, wobei eine Stahlbramme zunächst auf eine geeignete Temperatur erwärmt wird und durch einen oder mehrere Walzschritte bei einer ersten Temperatur, bei der Austenit rekristallisiert, zu einem Stahlband gewalzt wird. Anschließend wird durch einen oder mehrere Walzschritte bei einer zweiten Temperatur, unterhalb der ersten Temperatur und oberhalb einer Temperatur, bei der Austenit beginnt bei Abkühlung in Ferrit umzuwandeln, weiter gewalzt. Daran anschließend wird das Stahlband abgeschreckt bis zu einer geeigneten Quench Stop Temperatur. Nach Stoppen der Abschreckung bei der Quench Stop Temperatur wird an Luft weiter abgekühlt auf Umgebungstemperatur (siehe Zusammenfassung). Die WO 99/05336 A1 sieht demnach nicht wie von der vorliegenden Erfindung vorgeschlagen eine reine Lufthärtung allein durch die Abkühlung an Luft vor.

Die Offenlegungsschrift CN 109 402 499 A offenbart kein Lufthärten. Im Gegenteil, es wird unter Einsatz einer Kühlhaube ein sogenanntes "slow cooling treatment" über 72 h durchgeführt. Dieses ist nicht mit einem Lufthärten, also dem Abkühlen an Luft gleichzusetzen.

Die Offenlegungsschrift US 2007/267110 A1 offenbart ein Verfahren zur Herstellung hochfester Stahlrohre. Das Verfahren umfasst das Erzeugen einer Stahlbramme, das Aufheizen der Bramme auf Temperaturen über 2000 °F (~1093 °C), Walzen der Bramme zu einem Band mit gewünschter Dicke bei einer Temperatur oberhalb der Ac3-Starttemperatur, Abkühlen des Bandes auf eine Temperatur von 850 °F bis 950 °F (454 °C bis 510 °C), um eine überwiegend bainitische Struktur zu erhalten, Aufwickeln des Stahlbandes und Umformung zu einem Rohr. Des Weiteren wird offenbart, dass das Stahlband nach dem Walzen mittels Wasser auf die gewünschte Temperatur (850 °F bis 950 °F) abgekühlt wird. Damit offenbart die US 2007/267110 A1 keine luftgehärteten Stahlprodukte und auch kein Verfahren, das einen Schritt des Lufthärtens umfasst.

Die Kaltumformung lufthärtbarer Stähle zu einem Bauteil findet bei bekannten Legierungskonzepten üblicherweise im weichgeglühten Zustand des Stahlproduktes statt, um eine ausreichende Kaltumformbarkeit sicherzustellen und Bauteile mit anspruchsvollen Geometrien herstellen zu können.

Nach dem Stand der Technik sind unter Kaltumformung hierbei folgende Verfahrensvarianten zu verstehen:
a) Die direkte Herstellung entsprechender Bauteile aus weichem Warmband durch Tiefziehen oder Ähnlichem mit anschließender möglicher Vergütungsbehandlung zur Steigerung der Bauteilfestigkeit. Eine Vergütungsbehandlung bei lufthärtbarem Stahl würde bestehen aus einem erneuten Erwärmen des Bauteils nach der Umformung über die Ac3-Temperatur und einem Abkühlen an Luft (Lufthärtung) sowie einem Glühen beziehungsweise Anlassen auf eine erhöhte Temperatur unterhalb der Ac3-Temperatur.
b) Die Weiterverarbeitung zu Rohren mit entsprechenden Zieh- und Glühprozessen. Die Rohre selbst werden anschließend zu Bauteilen, zum Beispiel durch Biegen, Innenhochdruckumformen (IHU) oder Ähnlichem, umgeformt und anschließend vergütet.
c) Die Weiterverarbeitung des Warmbandes zu Kaltband mit integriertem (Hauben-) Glühprozess. Das Kaltband wird anschließend durch Tiefziehen oder Ähnlichem wie unter a) verarbeitet.

Allen beispielsweise aus den Offenlegungsschriften DE 10 2004 053 620 A1, DE 100 23 488 A1, DE 44 46 709 A1 oder der WO 2001/000351 A1 bekannten lufthärtbaren Stählen ist zudem gemeinsam, dass nach einer Umformung zu einem Bauteil der höherfeste Lufthärtungszustand dann über eine nachträgliche Wärmebehandlung, beispielsweise über eine Hochtemperaturverzinkung, wiedereingestellt werden muss. Die Umformung selbst kann bei Raumtemperatur oder erhöhter Temperatur zum Beispiel bis zur Ac1-Temperatur (Halbwarm) oder bis zur Ac3-Umwandlungstemperatur oder darüber erfolgen, falls es technisch erforderlich erscheint.

Die Herstellung von geschweißten Bauteilen, wie zum Beispiel Fahrwerksbauteilen oder Fahrwerkskomponenten, aus einem weichgeglühten Stahlband aus den bekannten lufthärtenden Stählen ist allerdings kostenintensiv, da das Stahlband als Warmband (Zustand warmgewalzt) oder als Kaltband (Zustand kaltgewalzt) nach dem Warm- oder Kaltwalzen, wie oben beschrieben, einer zusätzlichen Wärmenachbehandlung zur Herstellung einer ausreichenden Kaltumformbarkeit für die Bauteilherstellung unterzogen werden muss.

Eine zusätzliche Wärmebehandlung kann insbesondere bei flächigen Bauteilen zu einem erheblichen, ungewollten maßlichen Verzug des Bauteils führen.

Andererseits sind zum Beispiel bei geschweißten Fahrwerksbauteilen aus weichgeglühtem Stahlband aus lufthärtendem Stahl durch die oben beschriebenen "Erweichungen" im Schweißnahtbereich durch einen Härte- und Festigkeitsabfall die erreichbaren Dauerfestigkeiten noch nicht ausreichend.

Der Erfindung liegt daher die Aufgabe zugrunde, ein Verfahren zur Herstellung eines geschweißten Bauteils, insbesondere eines dynamisch beanspruchten Fahrwerksbauteils, aus einem hochfesten Stahl anzugeben, mit dem die genannten Nachteile überwunden werden, insbesondere mit dem im Schweißnahtbereich vergleichbare mechanische Eigenschaften, insbesondere Dauerfestigkeiten, wie im unbeeinflussten Grundwerkstoff erreicht werden, vorzugsweise sogar mit einer höheren Festigkeit als im Grundwerkstoff.

Nach der Lehre der Erfindung wird diese Aufgabe durch ein Verfahren gelöst, bei dem zunächst ein warmgewalztes Stahlprodukt aus hochfestem lufthärtbarem Stahl, mit einer Materialdicke von mindestens 1,5 mm erzeugt wird, wobei das warmgewalzte Stahlprodukt folgende chemische Zusammensetzung in Massen-% aufweist:
C: 0,03 bis 0,4, bevorzugt 0,06 bis 0,12, besonders bevorzugt 0,08 bis 0,10
Mn: 1,0 bis 4,0, bevorzugt 1,80 bis 2,20, besonders bevorzugt 1,80 bis 2,00
Si: 0,09 bis 2,0, bevorzugt 0,22 bis 0,34, besonders bevorzugt 0,25 bis 0,30
Al: 0,02 bis 2,0, bevorzugt 0,02 bis 0,06, besonders bevorzugt 0,02 bis 0,05
P: <=0,1, bevorzugt ≤ 0,020
S: <=0,1, bevorzugt ≤ 0,010
N: 0,001 bis 0,5, bevorzugt 0,0030 bis 0,0125, besonders bevorzugt 0,0030 bis 0,0080
Ti: 0,01 bis 0,2, bevorzugt 0,010 bis 0,050, besonders bevorzugt 0,020 bis 0,030
Cr: 0,05 bis 2,0, bevorzugt 0,60 bis 1,0, besonders bevorzugt 0,70 bis 0,80
B: 0,001 bis 0,1, bevorzugt 0,0015 bis 0,0060, besonders bevorzugt 0,0025 bis 0,0035
Mo: 0,01 bis 1,0, bevorzugt 0,10 bis 0,40, besonders bevorzugt 0,15 bis 0,30
V: 0,01 bis 0,2, bevorzugt 0,05 bis 0,09, besonders bevorzugt 0,05 bis 0,08 optional:
   Ni: 0,02 bis 1,0
   Nb: 0,01 bis 0,1
   Rest Eisen einschließlich üblicher stahlbegleitender Elemente.

Anschließend wird das erzeugte warmgewalzte Stahlprodukt allein durch die Abkühlung an Luft luftgehärtet, wonach das warmgewalzte, luftgehärtete Stahlprodukt eine Mindeststreckgrenze Rp0,2 von 450 MPa, eine Mindestzugfestigkeit Rm von 700 MPa und/oder eine Bruchdehnung A5 von mindestens 6 % und ein Komplexphasengefüge mit einem Bainitanteil von mehr als 50 % aufweist und danach im luftgehärteten Zustand ohne das sonst üblicher Weise erforderliche Weichglühen unmittelbar zu dem Bauteil umgeformt. Als letzter Schritt erfolgt das Erzeugen von Schweißverbindungen mittels Schmelzschweißen an dem Bauteil. Eine Vergütungsbehandlung des Bauteils, bestehend aus Erwärmen des gesamten Bauteils auf Temperaturen oberhalb von Ac3, Abkühlen und Anlassen, findet nicht statt.

Damit wird ein geschweißtes Bauteil insbesondere unter Vermeidung eines Weichglühens vor der Kaltumformung sowie unter Vermeidung einer abschließenden Vergütungsbehandlung erhalten.

In diesem Zusammenhang wird darauf hingewiesen, dass die abschließende Erzeugung von Schweißverbindungen an dem Bauteil nicht als Vergütungsbehandlung zu verstehen ist. Zwar werden beim Schweißen stellenweise, lokal begrenzt um die Schweißnaht Temperaturen von oberhalb der Ac3-Temperatur erreicht, jedoch werden diese Schweißverbindungen nicht zur Erhöhung einer Festigkeit des gesamten Bauteilwerkstoffes im Sinne einer Vergütungsbehandlung erzielt.

Im Zusammenhang mit Bereichsangaben in Massen-%, wie beispielsweise C: 0,03 bis 0,4 Massen-%, werden der Anfangswert und auch der Endwert des Bereichs als mitumfasst angesehen.

Die Umformung zu einem Bauteil kann mit den üblichen Kaltblechumformverfahren, zum Beispiel mittels Tiefziehen, Abkanten, Biegen, Rollprofilieren oder Bördeln, erfolgen.

Bevorzugt erfolgt die Umformung dabei als Kaltumformung im Bereich von -5 °C bis 40 °C, vorzugsweise bei Raumtemperatur im Bereich von 15 °C bis 25 °C.

Es kann aber auch, falls es technisch erforderlich erscheint, bei erhöhten Temperaturen bis zur Ac1-Temperatur, bis zur Ac3-Temperatur oder bis über die Ac3-Temperatur hinaus bis zu 1000 °C durchgeführt werden.

Erfindungsgemäß weist dabei das warmgewalzte Stahlprodukt vor der Kaltumformung eine Mindeststreckgrenze Rp0,2 von mehr als 450 MPa oder sogar mehr als 600 MPa und/oder eine Mindestzugfestigkeit Rm von 700 MPa oder sogar mehr als 800 MPa auf. Im Sinne der Erfindung wird dies als Definition für die Eigenschaft hochfest angesehen. Das warmgewalzte Stahlprodukt weist auch im luftgehärteten Zustand eine Bruchdehnung A5 von mindestens 6 %, vorzugsweise von mindestens 13 %, und ein Komplexphasengefüge mit einem Bainitanteil von mehr als 50 % auf.

Auch wird ein geschweißtes, durch Kaltumformung, aus einem warmgewalzten und luftgehärteten Stahlprodukt aus luftgehärtetem hochfestem Stahl mit einer Materialdicke von mindestens 1,5 mm hergestelltes Bauteil zur Verfügung gestellt, wobei das Stahlprodukt folgende chemische Zusammensetzung in Massen-% aufweist:
C: 0,03 bis 0,4, bevorzugt 0,06 bis 0,12, besonders bevorzugt 0,08 bis 0,10
Mn: 1,0 bis 4,0, bevorzugt 1,80 bis 2,20, besonders bevorzugt 1,80 bis 2,00
Si: 0,09 bis 2,0, bevorzugt 0,22 bis 0,34, besonders bevorzugt 0,25 bis 0,30
Al: 0,02 bis 2,0, bevorzugt 0,02 bis 0,06, besonders bevorzugt 0,05
P: <=0,1, bevorzugt ≤ 0,020
S: <=0,1, bevorzugt ≤ 0,010
N: 0,001 bis 0,5, bevorzugt 0,0030 bis ≤ 0,0125, besonders bevorzugt 0,0030 bis 0,0080
Ti: 0,01 bis 0,2, bevorzugt 0,010 bis ≤ 0,050, besonders bevorzugt 0,020 bis ≤ 0,030
Cr: 0,05 bis 2,0, bevorzugt 0,60 bis ≤ 1,0, besonders bevorzugt 0,70 bis ≤ 0,80
B: 0,001 bis 0,1, bevorzugt 0,0015 bis ≤ 0,0060, besonders bevorzugt 0,0025 bis ≤ 0,0035
Mo: 0,01 bis 1,0, bevorzugt 0,10 bis ≤ 0,40, besonders bevorzugt 0,15 bis ≤ 0,30
V: 0,01 bis 0,2, bevorzugt 0,05 bis ≤ 0,09, besonders bevorzugt 0,05 bis ≤ 0,08 optional:
   Ni: 0,02 bis 1,0
   Nb: 0,01 bis 0,1
   wobei das warmgewalzte und luftgehärtete Stahlprodukt im luftgehärteten Zustand, vor der Kaltumformung zu einem Bauteil eine Mindeststreckgrenze Rp0,2 von 450 MPa oder vorzugsweise mehr als 600 MPa, eine Mindestzugfestigkeit Rm von 700 MPa oder vorzugsweise mehr als 800 MPa und/oder eine Bruchdehnung A5 von mindestens 6 %, vorzugsweise 13 %, aufweist und
   wobei das warmgewalzte und durch Abkühlung allein an Luft luftgehärtete Stahlprodukt (2, 3) ein Komplexphasengefüge mit einem Bainitanteil von mehr als 50 %, bevorzugt mehr als 80 % und besonders bevorzugt mehr als 90 %, aufweist und wobei das warmgewalzte, luftgehärtete und umgeformte Stahlprodukt (2, 3) im Bereich einer Wärmeeinflusszone einer Schweißverbindung (4) ein Komplexphasengefüge mit einem Bainitanteil von mehr als 50 %, bevorzugt mehr als 80 % und besonders bevorzugt mehr als 90 %, aufweist.

Übliche Blechdicken für die genannten warmgewalzten Stahlprodukte liegen zwischen 1,5 mm bis 25 mm, vorzugsweise bis 15 mm.

Als Schmelzschweißverfahren kommen alle in der industriellen Fertigung gebräuchlichen Verfahren zum Einsatz wie zum Beispiel das Strahlschweißen, insbesondere das Laserstrahlschweißen, oder Metalllichtbogenschweißverfahren, wie zum Beispiel das Schutzgasschweißen.

In einer vorteilhaften Weiterbildung der Erfindung wird zur Herstellung des Bauteils ein warmgewalztes Stahlband oder Stahlblech für die Kaltumformung verwendet, welches nach dem Warmwalzen und Abkühlen einen luftgehärteten Zustand aufweist. Da die Kaltumformbarkeit des warmgewalzten und luftgehärteten Stahlbandes oder Stahlbleches auf Grund des Legierungskonzeptes ausreichend groß ist, ist ein Weichglühen zur Herstellung einer ausreichenden Kaltumformbarkeit damit nicht mehr notwendig und die Herstellkosten des Bauteils sinken damit deutlich.

Es hat sich bei Untersuchungen überraschend gezeigt, dass der lufthärtbare Stahl eine ausreichend hohe Kaltumformbarkeit im luftgehärteten Zustand aufweist. So wurden in den Versuchen Bruchdehnungen A5 von 13 % und mehr bei Blechdicken von bis zu 25,0 mm ermittelt. Die warmgewalzten Stahlprodukte können dabei mit einer Materialdicke von 1,5 mm bis 25,0 mm, vorzugsweise bis zu 15 mm, vorliegen und decken damit das typische Dickenspektrum im Fahrwerksbereich ab.

Auf ein Weichglühen des Stahlproduktes nach dem Warmwalzen kann damit verzichtet werden. Gleiches gilt für die Kaltumformung warmgewalzter nahtloser Rohre zu Bauteilen.

Zudem haben die Untersuchungen der mechanischen Eigenschaften am geschweißten Bauteil gezeigt, dass im Schweißnahtbereich durch die eingebrachte Wärme beim Schweißen und die anschließende Luftabkühlung, es zu keinem Erweichen des Schweißnahtbereiches mehr kommt, da die lufthärtenden Eigenschaften des Stahls einen Härte- und Festigkeitsabfall in diesem Bereich verhindern, vorzugsweise Härte und Festigkeit sogar erhöhen. Die mechanischen Eigenschaften und auch die Dauerfestigkeit bei geschweißten Fahrwerkskomponenten liegen damit im Schweißnahtbereich und im angrenzenden unbeeinflussten Grundwerkstoff des Stahlproduktes zumindest auf vergleichbarem Niveau. Als vergleichbares Niveau werden Abweichungen zwischen Grundwerkstoff und Schweißnahtbereich im Bereich von +- 20 % bezogen auf dessen Zugfestigkeit beziehungsweise Härte verstanden. Anstatt nur eines vergleichbaren Niveaus kann auch ein höheres Niveau mit Werten von bis zu +50 % aber auch von bis zu +100 % erreicht werden. Hierdurch wird eine höhere Spannungsübertragung im Bereich der Wärmeeinflusszone ermöglicht.

Vorteilhaft für das Erreichen einer hohen Dauer- beziehungsweise Betriebsfestigkeit ist nicht nur die vorzugsweise gesteigerte Härte des Schweißnahtbereiches, sondern auch das sich einstellende überwiegende feinkörnige bainitische Gefüge für die Wärmeeinflusszone sowie für die Schweißnaht beziehungsweise für das Schweißgut, die zusätzlich abhängig ist von dem gewählten Schweißdraht.

Erfindungsgemäß weist somit das warmgewalzte Stahlprodukt ein Komplexphasengefüge mit einem Bainitanteil von mehr als 50 %, bevorzugt mehr als 80 % und besonders bevorzugt mehr als 90 % auf. Diese Gefügestruktur gilt erfindungsgemäß auch für den Bereich der Wärmeeinflusszone der Schweißverbindung.

Nachfolgend wird die Erfindung an eines in Figuren dargestellten und ausgewerteten Versuchs näher erläutert. Es zeigen:
Figur 1 einen Ausschnitt eines erfindungsgemäßen geschweißtes Bauteils 1 in einer seitlichen Schnittansicht,
Figur 2 eine qualitative Ergebnisdarstellung einer rasterartigen Härteprüfung über den Ausschnitt gemäß Figur 1,
Figur 3 ein Gefügeschliffbild aus dem Bereich des Grundwerkstoffs des geschweißten Bauteils 1,
Figur 4 ein Gefügeschliffbild aus dem Bereich der Wärmeeinflusszone des geschweißten Bauteils 1,
Figur 5 ein Gefügeschliffbild aus dem Bereich der Schmelzlinie des geschweißten Bauteils 1,
Figur 6 ein Gefügeschliffbild aus dem Bereich der Schweißnaht des geschweißten Bauteils 1.

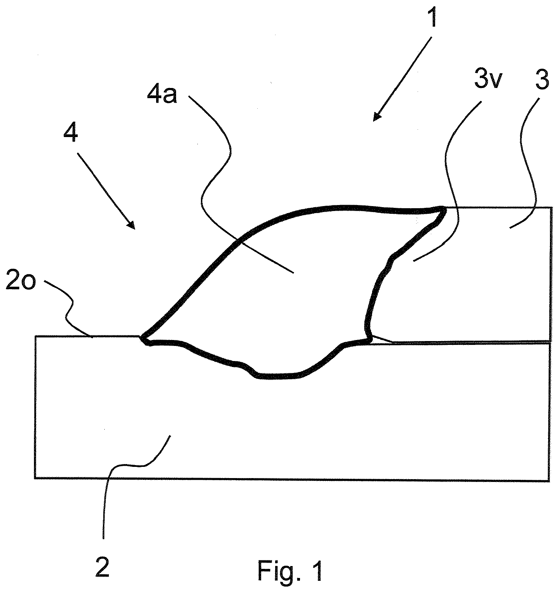

Die Figur 1 zeigt einen Ausschnitt eines erfindungsgemäß erhaltenen geschweißten Bauteils 1 in einer seitlichen Schnittansicht einer typischen Überlappverbindung. Das geschweißte Bauteil 1 in Form eines Fahrwerksbauteils besteht im Wesentlichen aus einem ersten unteren Stahlprodukt 2, insbesondere Stahlflachprodukt, auf dem teilweise überdeckend ein weiteres zweites oberes Stahlprodukt 3, insbesondere Stahlflachprodukt, aufgelegt ist. Die Stahlprodukte 2, 3 weisen jeweils eine Materialdicke von 3 mm auf. Das obere Stahlprodukt 3 ist im Bereich eines vorderen Randes 3v über eine Schweißverbindung 4 nach Art eines Überlappstoßes mit einer Oberfläche 2o des unteren Stahlproduktes 2 verbunden.

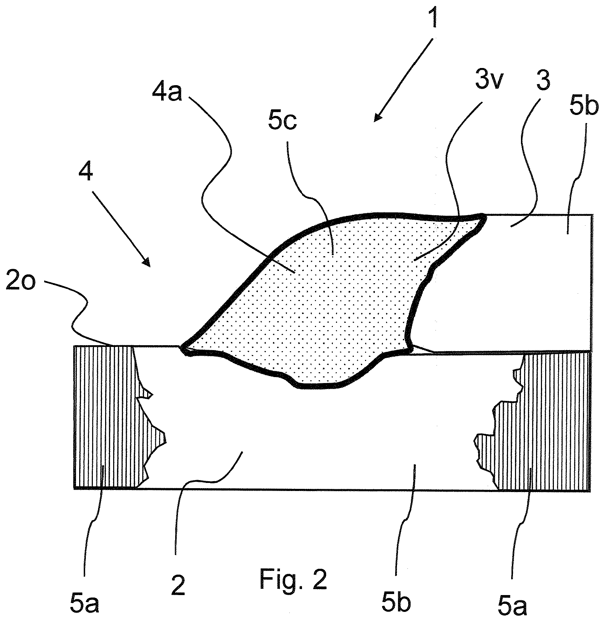

In der Figur 2 ist qualitativ das Ergebnis einer rasterartigen Härteprüfung über den gesamten dargestellten Ausschnitt des geschweißten Bauteils 1 dargestellt. Ausgehend von der Härte des unteren Stahlprodukts 2 im Grundzustand, die als erster Härtebereich 5a mit einer vertikalen Schraffur dargestellt ist, schließt sich in Richtung des Schweißguts 4a beziehungsweise der Schmelze in üblicher Weise eine Wärmeeinflusszone in den Stahlprodukten 2, 3 an, die als zweiter Härtebereich 5b ohne Schraffur oder Muster dargestellt ist. Ausgehend von den lufthärtenden Eigenschaften des Stahls ist der zweite Härtebereich 5b gegenüber dem ersten Härtebereich 5a aufgehärtet. Das Schweißgut 4a der Schweißverbindung 4 weist einen dritten Härtebereich 5c auf, der durch ein Punktmuster gekennzeichnet ist. Dieser dritte Härtebereich 5c ist in Bezug auf die Härte je nach Wahl des Schweißdrahtes einstellbar und wird üblicherweise in einem Härtebereich des Stahlprodukts 2, 3 im Grundzustand liegen.

Die ermittelten Messwerte für den ersten Härtebereich 5a liegen im Bereich 280 bis 320 HV 0,1, für den zweiten Härtebereich 5b im Bereich 430 bis 470 HV 0,1 und für den dritten Härtebereich 5c im Bereich 230 bis 270 HV 0,1.

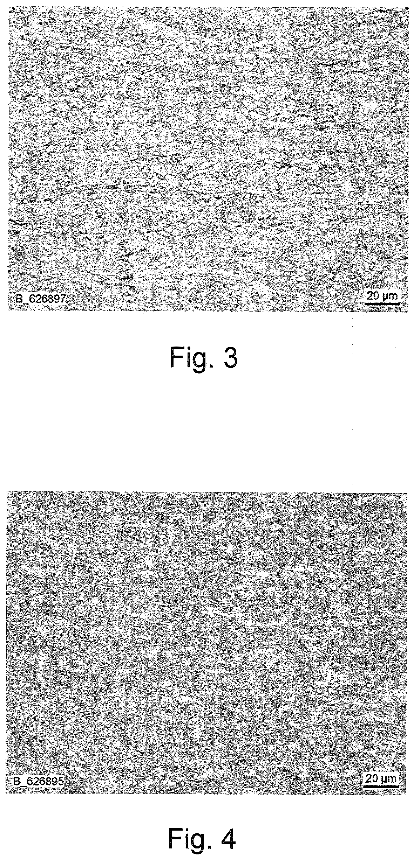

Die Figuren 3 bis 6 zeigen jeweils ein Gefügeschliffbild aus verschiedenen Bereichen des geschweißten Bauteils 1. Alle Gefügeschliffbilder sind im Zusammenhang mit der Probenvorbereitung mit Nital geätzt worden und in einer Vergrößerung von 1:500 dargestellt.

Die Figur 3 zeigt ein Gefügeschliffbild aus dem Bereich des Grundwerkstoffs des geschweißten Bauteils 1. Dort liegt ein Komplexphasengefüge mit 5 % Ferrit, 3 % Perlit, 90 % Bainit und 2 % Martensit vor. Die mittlere Ferritkorngröße ist 13,5 µm.

In der Figur 4 ist ein Gefügeschliffbild aus dem Bereich der Wärmeeinflusszone des geschweißten Bauteils 1 gezeigt. Es ist ein Gefüge aus Bainit mit etwas Ferrit zu erkennen. Die mittlere Ferritkorngröße ist 13,5 µm.

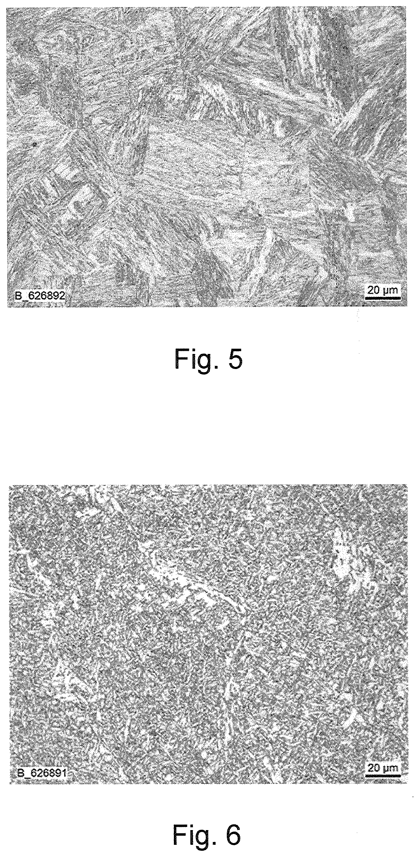

Die Figur 5 zeigt ein Gefügeschliffbild aus dem Bereich der Schmelzlinie des geschweißten Bauteils 1. Dort liegt als Gefüge 100 % Bainit vor.

In der Figur 6 ist ein Gefügeschliffbild aus dem Bereich der Schweißnaht 4a des geschweißten Bauteils 1 gezeigt. Als Gefüge ist Bainit durchzogen von einem leichten Netz aus Ferrit und Bainit zu erkennen.

Wie bereits zuvor ausgeführt ist, wird mit dem erfindungsgemäß erhaltenen geschweißten Bauteil 1 eine hohe Dauer- beziehungsweise Betriebsfestigkeit durch das sich im Bereich der Schweißverbindung 4 einstellende überwiegende feinkörnige bainitische Gefüge für die Wärmeeinflusszone sowie für die Schweißnaht 4a erreicht. Der Grundwerkstoff des geschweißten Bauteils liegt bereits als Komplexphasengefüge mit einem überwiegenden Anteil von Bainit vor.

Der erfindungsgemäße hochfeste, lufthärtende Stahl für den Fahrzeugleichtbau zeichnet sich ebenfalls dadurch aus, dass mit diesem Legierungskonzept eine hervorragende Schweißbarkeit bei den üblichen Schweißverfahren, wie zum Beispiel Schutzgasschweißen, Schutzgaslöten oder Laserschweißen erreicht wird, ohne die Nachteile bekannter lufthärtbarer Stähle. Auch das Hochfrequenzinduktionsschweißen (HFI-Schweißen) gestaltet sich unproblematisch ohne die unerwünschten Chromcarbidausscheidungen in der Schweißnaht.

Der im Vergleich zum bekannten lufthärtenden Stahl für nahtlose Rohre ebenfalls reduzierte Gehalt an C und Mn sichert eine hervorragende allgemeine Schweißbarkeit mit gleichzeitig hervorragenden Umformeigenschaften.

Gleichzeitig wird durch den abgesenkten Si-Gehalt die Verzinkbarkeit des Stahles und durch den Zusatz von V die Anlassbeständigkeit sichergestellt.

Bei den Untersuchungen hat sich herausgestellt, dass der für den lufthärtenden Effekt maßgebliche Cr-Gehalt auf einen für die Vermeidung von Chromcarbidausscheidungen beim HFI-Schweißen unkritischen Wert abgesenkt werden kann, wenn gleichzeitig über ein komplexes Legierungskonzept auf Basis Cr-Mo-Ti-B die Lufthärtbarkeit des Stahls wieder verbessert wird.

Erfindungsgemäß beruht das Legierungskonzept für das Stahlprodukt auf der Erkenntnis, dass im Gegensatz zum bekannten Stahl für nahtlose Rohre, bei dem Stickstoff vollständig von Titan abgebunden werden muss, um Bornitridausscheidungen zu vermeiden und damit die Wirksamkeit des zugegebenen Bors sicherzustellen, der Stickstoff auch von anderen Legierungselementen wie Cr oder Mo abgebunden wird.

Die Festlegung einer überstöchiometrischen Titanzugabe im Verhältnis zum Stickstoff ist somit nicht mehr zwingend erforderlich. Durch die Zugabe von Vanadin werden bei höheren Anlasstemperaturen Ausscheidungen von Vanadiumkarbonitriden vom Typ V(C,N) ausgelöst, die über eine sekundäre Härtung einem Festigkeitsabfall entgegenwirken.

Nachteilig bei diesen auf Mn-Si-Ti-B basierenden Legierungskonzepten ist jedoch der zu hohe Si-Gehalt, der zwar für das Erreichen hoher Festigkeitswerte erforderlich ist, eine Stückverzinkung jedoch erschwert. Ab Temperaturen von ca. 550 °C sinkt zudem die Festigkeit des Werkstoffes deutlich unter die geforderten Werte, so dass auch die Anlassbeständigkeit nicht gewährleistet ist.

Auf Basis dieser Erkenntnisse wurde das bereits oben beschriebene erfindungsgemäße Legierungskonzept festgelegt, wobei sich als vorteilhaft folgender Analysenbereich in Massen-% herausgestellt hat. Die jeweiligen Angaben zu den Analysenbereiche können dabei einzeln oder in Summe erfüllt sein:

| | |
|---|---|
| C | 0,06 bis 0,12 |
| Mn | 1,8 bis 2,20 |
| Si | 0,22 bis 0,34 |
| Al | 0,02 bis 0,06 |
| P | ≤ 0,020 |
| S | ≤ 0,010 |
| N | 0,0030 bis 0,0125 |
| Ti | 0,010 bis 0,050 |
| Cr | 0,60 bis 1,0 |
| B | 0,0015 bis 0,0060 |
| Mo | 0,10 bis 0,40 |
| V | 0,05 bis 0,09 |

Besonders vorteilhafte Verarbeitungs- und Bauteileigenschaften ergeben sich, wenn folgender Analysenbereich in Massen-% eingehalten wird:

| | |
|---|---|
| C | 0,08 bis 0,10 |
| Al | 0,02 bis 0,05 |
| Si | 0,25 bis 0,30 |
| Mn | 1,80 bis 2,00 |
| P | ≤ 0,020 |
| S | ≤ 0,010 |
| N | 0,0030 bis 0,0080 |
| Ti | 0,020 bis 0,030 |
| Cr | 0,70 bis 0,80 |
| B | 0,0025 bis 0,0035 |
| Mo | 0,15 bis 0,30 |
| V | 0,05 bis 0,08 |

Die Ergebnisse zeigen die hohe Anlassbeständigkeit des Stahls bis zu Temperaturen von 700 °C.

Wie Untersuchungen an geschweißten Bauteilen aus dem erfindungsgemäß warmgewalzten und luftgehärteten Stahlprodukt gezeigt haben, ist dieser Stahl nicht nur vorteilhaft im Automobilbereich einsetzbar, sondern darüber hinaus in allen Einsatzgebieten, in denen eine gute Kaltumformbarkeit in Kombination mit hohen Stahlfestigkeiten oder Dauer- und Betriebsfestigkeiten bei dynamischer Beanspruchung geschweißter Bauteile erforderlich ist. Der Einsatzbereich für derartige Bauteile kann dementsprechend zum Beispiel die Automobilindustrie insbesondere für Fahrwerksbauteile, Baugeräteindustrie, Hausgeräteindustrie oder der chemische Apparatebau sein. In der Automobilindustrie ist eine Verwendung als Fahrwerksbauteil, Stoßfänger oder Querträger denkbar.

Die Vorteile dieses erfindungsgemäßen, lufthärtenden Stahls sind nachfolgend noch einmal aufgelistet:
- sehr gute Kaltumformbarkeit im luftgehärteten Zustand,
- sehr gute Schweißbarkeit im weichen und luftgehärteten Zustand,
- sehr gute HFI-Schweißbarkeit,
- gut beschichtbar mit den üblichen Beschichtungsverfahren, wie kathodische Tauchlackierung (KTL), Feuerverzinkung und Hochtemperaturverzinkung,
- Einsatz für geschweißte, statisch und dynamisch hoch belastete Bauteile, insbesondere im Fahrwerk von Fahrzeugen,
- kostengünstiges Legierungskonzept.

### Bezugszeichenliste

1 geschweißtes Bauteil
2 unteres Stahlprodukt
3 oberes Stahlprodukt
4 Schweißverbindung
4a Schweißnaht
5a erste Härtezone
5b zweite Härtezone
5c dritte Härtezone

## Patentansprüche

1. Verfahren zur Herstellung eines geschweißten Bauteils (1), umfassend, insbesondere ausschließlich bestehend aus, den folgenden Schritten:
- Erzeugen eines warmgewalzten Stahlprodukts (2, 3) aus einem hochfesten lufthärtbaren Stahl mit einer Materialdicke von mindestens 1,5 mm, wobei das warmgewalzte Stahlprodukt (2, 3) folgende chemische Zusammensetzung in Massen-% aufweist:
C: 0,03 bis 0,4, bevorzugt 0,06 bis 0,12, besonders bevorzugt 0,08 bis 0,10
Mn: 1,0 bis 4,0, bevorzugt 1,80 bis 2,20, besonders bevorzugt 1,80 bis 2,00
Si: 0,09 bis 2,0, bevorzugt 0,22 bis 0,34, besonders bevorzugt 0,25 bis 0,30
Al: 0,02 bis 2,0, bevorzugt 0,02 bis 0,06, besonders bevorzugt 0,02 bis 0,05
P: <=0,1, bevorzugt ≤ 0,020
S: <=0,1, bevorzugt ≤ 0,010
N: 0,001 bis 0,5, bevorzugt 0,0030 bis 0,0125, besonders bevorzugt 0,0030 bis 0,0080
Ti: 0,01 bis 0,2, bevorzugt 0,010 bis 0,050, besonders bevorzugt 0,020 bis 0,030
Cr: 0,05 bis 2,0, bevorzugt 0,60 bis 1,0, besonders bevorzugt 0,70 bis 0,80
B: 0,001 bis 0,1, bevorzugt 0,0015 bis 0,0060, besonders bevorzugt 0,0025 bis 0,0035
Mo: 0,01 bis 1,0, bevorzugt 0,10 bis ≤ 0,40, besonders bevorzugt 0,15 bis 0,30
V: 0,01 bis 0,2, bevorzugt 0,05 bis ≤ 0,09, besonders bevorzugt 0,05 bis 0,08 optional:
Ni: 0,02 bis 1,0
Nb: 0,01 bis 0,1
Rest Eisen einschließlich üblicher stahlbegleitender Elemente,
- anschließendes Lufthärten allein durch die Abkühlung des erzeugten warmgewalzten Stahlprodukts (2, 3) an Luft, wonach das warmgewalzte, luftgehärtete Stahlprodukt (2, 3) eine Mindeststreckgrenze Rp0,2 von 450 MPa, eine Mindestzugfestigkeit Rm von 700 MPa und/oder eine Bruchdehnung A5 von mindestens 6 % und ein Komplexphasengefüge mit einem Bainitanteil von mehr als 50 % aufweist und
- danach Umformen des warmgewalzten Stahlprodukts (2, 3) im luftgehärteten Zustand zu einem Bauteil,
- Erzeugen von Schweißverbindungen mittels Schmelzschweißen an dem Bauteil.

2. Verfahren nach Anspruch 1, **dadurch gekennzeichnet, dass** die Umformung ein übliches Kaltblechumformverfahren, insbesondere Tiefziehen, Abkanten, Rollprofilieren, Biegen oder Bördeln, ist.

3. Verfahren nach Anspruch 1 oder 2, **dadurch gekennzeichnet, dass** die Umformung bei einer Temperatur im Bereich von -5 °C bis 40 °C, vorzugsweise bei Raumtemperatur im Bereich von 15 °C bis 25 °C, erfolgt.

4. Verfahren nach mindestens einem der Ansprüche 1 bis 3, **dadurch gekennzeichnet, dass** als Schmelzschweißverfahren das Metalllichtbogenschweißen oder das Strahlschweißen, insbesondere das Laserstrahlschweißen, eingesetzt werden.

5. Verfahren nach Anspruch 4, **dadurch gekennzeichnet, dass** als Metalllichtbogenschweißen das Schutzgasschweißen eingesetzt wird.

## Claims

1. Method for manufacturing a welded component (1), the method comprising, in particular exclusively consisting of, the following steps:
- producing a hot-rolled steel product (2, 3) from a high-strength air-hardenable steel having a material thickness of at least 1.5 mm, wherein the hot-rolled steel product (2, 3) has the following chemical composition in % by mass:
C: 0.03 to 0.4, preferably 0.06 to 0.12, particularly preferably 0.08 to 0.10
Mn: 1.0 to 4.0, preferably 1.80 to 2.20, particularly preferably 1.80 to 2.00
Si: 0.09 to 2.0, preferably 0.22 to 0.34, particularly preferably 0.25 to 0.30
Al: 0.02 to 2.0, preferably 0.02 to 0.06, particularly preferably 0.02 to 0.05
P: <=0.1, preferably ≤ 0.020
S: <=0.1, preferably ≤ 0.010
N: 0.001 to 0.5, preferably 0.0030 to 0.0125, particularly preferably 0.0030 to 0.0080
Ti: 0.01 to 0.2, preferably 0.010 to 0.050, particularly preferably 0.020 to 0.030
Cr: 0.05 to 2.0, preferably 0.60 to 1.0, particularly preferably 0.70 to 0.80
B: 0.001 to 0.1, preferably 0.0015 to 0.0060, particularly preferably 0.0025 to 0.0035
Mo: 0.01 to 1.0, preferably 0.10 to ≤ 0.40, particularly preferably 0.15 to 0.30
V: 0.01 to 0.2, preferably 0.05 to ≤ 0.09, particularly preferably 0.05 to 0.08 optionally:
Ni: 0.02 to 1.0
Nb: 0.01 to 0.1
remainder iron including conventional steel-accompanying elements,
- subsequently air hardening solely by cooling the produced hot-rolled steel product (2, 3) in air, after which the hot-rolled, air-hardened steel product (2, 3) has a minimum yield strength Rp0.2 of 450 MPa, a minimum tensile strength Rm of 700 MPa, and/or a breaking elongation A5 of at least 6%, and a complex phase structure with a bainite content of more than 50%, and
- then forming the hot-rolled steel product (2, 3) in the air-hardened state to form a component,
- producing welded joints by fusion welding on the component.

2. Method according to claim 1, **characterised in that** the forming is a conventional cold sheet-metal-forming process, in particular deep drawing, folding, roll forming, bending or flanging.

3. Method according to claim 1 or 2, **characterised in that** the forming takes place at a temperature in the range of -5°C to 40°C, preferably at ambient temperature in the range of 15°C to 25°C.

4. Method according to at least one of claims 1 to 3, **characterised in that** metal arc welding or beam welding, in particular laser beam welding, are implemented as fusion welding processes.

5. Method according to claim 4, **characterised in that** shielded-arc welding is implemented as metal arc welding.

## Revendications

1. Procédé de fabrication d'un composant soudé (1), comprenant, notamment exclusivement, les étapes suivantes :
- générer un produit en acier laminé à chaud (2, 3) à partir d'un acier à haute résistance durcissable à l'air, d'une épaisseur d'au moins 1,5 mm, le produit en acier laminé à chaud (2, 3) ayant la composition chimique suivante, en % massique :
C: 0,03 à 0,4, de préférence 0,06 à 0,12, de manière particulièrement préférée 0,08 à 0,10
Mn: 1,0 à 4,0, de préférence 1,80 à 2,20, de manière particulièrement préférée 1,80 à 2,00
Si: 0,09 à 2,0, de préférence 0,22 à 0,34, de manière particulièrement préférée 0,25 à 0,30
Al: 0,02 à 2,0, de préférence 0,02 à 0,06, de manière particulièrement préférée 0,02 à 0,05
P: <= 0,1, de préférence 0,020
S: <= 0,1, de préférence 0,010
N: 0,001 à 0,5, de préférence 0,0030 à 0,0125, de manière particulièrement préférée 0,0030 à 0,0080
Ti: 0,01 à 0,2, de préférence 0,010 à 0,050, de manière particulièrement préférée 0,020 à 0,030
Cr: 0,05 à 2,0, de préférence 0,60 à 1,0, de manière particulièrement préférée 0,70 à 0,80
B: 0,001 à 0,1, de préférence 0,0015 à 0,0060, de manière particulièrement préférée 0,0025 à 0,0035
Mo: 0,01 à 1,0, de préférence 0,10 à ≤ 0,40, de manière particulièrement préférée 0,15 à 0,30
V: 0,01 à 0,2, de préférence 0,05 à ≤ 0,09, de manière particulièrement préférée 0,05 à 0,08
facultativement :
Ni: 0,02 à 1,0
Nb: 0,01 à 0,1
le reste étant du fer, y compris les éléments habituels accompagnant l'acier,
- puis faire durcir à l'air uniquement par refroidissement à l'air du produit en acier laminé à chaud (2, 3) généré, après quoi le produit en acier laminé à chaud (2, 3) durci à l'air présentant une limite d'élasticité minimale Rp0,2 de 450 MPa, une résistance à la traction minimale Rm de 700MPa et/ou un allongement à la rupture A5 d'au moins 6 % et une structure de phase complexe ayant une teneur en bainite supérieure à 50 %, et
- puis soumettre le produit en acier laminé à chaud (2, 3) à l'état durci à l'air à un processus de formage pour donner un composant,
- générer des liaisons soudées par soudage par fusion sur le composant.

2. Procédé selon la revendication 1, **caractérisé en ce que** le formage est un procédé classique de formage de tôle à froid, notamment d'emboutissage profond, de pliage, de profilage au rouleau, de cintrage ou de bordage.

3. Procédé selon la revendication 1 ou 2, **caractérisé en ce que** le formage est effectué à une température dans la gamme allant de -5 °C à 40 °C, de préférence à la température ambiante dans la gamme allant de 15 °C à 25 °C.

4. Procédé selon l'une au moins des revendications 1 à 3, **caractérisé en ce que** l'on utilise comme procédé de soudage par fusion le soudage à l'arc avec électrode métallique ou le soudage par faisceau, en particulier le soudage par faisceau laser.

5. Procédé selon la revendication 4, **caractérisé en ce que** le soudage à l'arc sous protection gazeuse est utilisé comme soudage à l'arc avec électrode métallique.
